**Europäisches Patentamt**

**European Patent Office**

**Office européen des brevets**

(19)

(11) Publication number : **0 380 453 B1**

# EUROPEAN PATENT SPECIFICATION

(12)

(45) Date of publication of patent specification :
18.03.92 Bulletin 92/12

(51) Int. Cl.⁵ : **B60H 3/06**

(21) Application number : **90830012.2**

(22) Date of filing : **16.01.90**

(54) **A filtering device for motor vehicle air-conditioning systems.**

(30) Priority : **20.01.89 IT 5282489**

(43) Date of publication of application :
01.08.90 Bulletin 90/31

(45) Publication of the grant of the patent :
18.03.92 Bulletin 92/12

(84) Designated Contracting States :
**DE ES FR GB IT SE**

(56) References cited :
**EP-A- 0 125 562
EP-A- 0 214 605
DE-A- 1 957 902
DE-A- 3 545 664
DE-A- 3 626 391
US-A- 2 835 183
US-A- 4 610 703**

(73) Proprietor : **BORLETTI CLIMATIZZAZIONE
S.r.l.
Frazione Masio, 24
I-10046 Poirino (Torino) (IT)**

(72) Inventor : **Lovera, Giovanni
Via Tanaro 5
I-12069 Cinzano Santa Vittoria D'alba (IT)**

(74) Representative : **Buzzi, Franco et al
c/o Jacobacci-Casetta & Perani S.p.A. Via
Alfieri, 17
I-10121 Torino (IT)**

EP 0 380 453 B1

Jouve, 18, rue Saint-Denis, 75001 PARIS

## Description

The present invention relates to a filtering device for motor vehicle air-conditioning systems.

More specifically, the invention concerns a device of the type comprising a fan whose inlet is associated with the internal part of a tubular filter, and first and second ducts which supply air to the fan from outside and from inside the passenger compartment respectively.

A device of this type is known from German patent application DE-A- 3626391 which describes a filtering device which is provided with first and second valves associated with the first and second supply ducts, and a third valve which enables the air coming from the two ducts to bypass the tubular filter.

The object of the present invention is to provide a filter of the type specified at the beginning of the present description which is simpler and has less components than the known device.

According to the present invention, this object is achieved by virtue of the fact that the first duct is connected to a chamber which surrounds the side wall of the filter, and the second duct is connected to the internal part of the filter, and of the fact that adjustment valve means are associated with the first and second ducts and are adapted to assume any configuration between a first operative position in which the first duct is closed and the second duct is open and a second operative position in which the first duct is open and the second duct is closed.

By virtue of the above arrangement, only the air coming from outside the passenger compartment is filtered, the loss of pressure in the recycling duct therefore being reduced and an improvement in the overall efficiency of the filter thus being achieved.

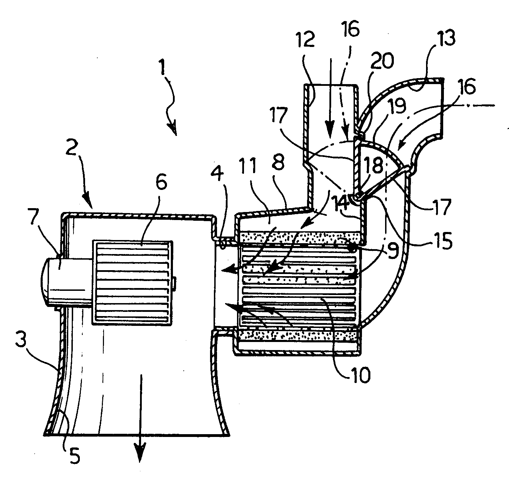

Further characteristics and advantages of the present invention will become clear in the course of the detailed description which follows with reference to the appended drawing which is provided by way of non-limiting example and shows schematically a longitudinal section of a filter according to the invention.

With reference to the drawing, a filtering device for motor vehicle air-conditioning systems is indicated 1. The device 1 includes a fan 2 with a containing housing 3 in which are defined an inlet aperture 4 and an outlet aperture 5 for the air flow. A vaned rotor 6 is arranged within the housing 3 and is operated by an electric motor 7 fixed to the housing 3.

The fan 2 is connected to a housing 8 within which a tubular filter 9 is situated. The tubular filter 9 divides the internal space of the housing 8 into a cylindrical portion 10 inside the filter 9 and an annular chamber 11 surrounding the outer lateral wall of the filter 9. The annular chamber 11 is connected to a first duct 12 which conveys air coming from outside the passenger compartment. The two end parts of the cylindrical portion 10 inside the filter 9 are open and are connected respectively to the inlet 4 of the fan 2 and to a second duct 13 which conveys air coming from inside the passenger compartment.

The two ducts 12 and 13 have a common separating wall 14 which has an aperture 15 in which a valve 16 is mounted. The valve 16 is constituted by a pair of blades 17 which are in a V-shaped arrangement and are hinged at their apex 18 to the wall 14 about an axis perpendicular to the plane of the drawing. The two blades 17 are interconnected by an arcuate portion 19 which is sealingly slidable on an edge 20 of the aperture 15 in the separating wall 14.

The valve 16 is movable between a first working position, shown in broken outline in the drawing, which corresponds to the duct 12 being closed and the duct 13 being open, and a second working position, shown in continuous outline, in which the duct 12 is open and the duct 13 is closed. The valve 16 can assume any position intermediate the two above working positions, so as to vary the relative quantities of the air coming from outside and from inside the passenger compartment.

## Claims

1. A filtering device for motor-vehicle air-conditioning systems, comprising a fan (2) whose inlet (4) is associated with the internal part (10) of a tubular filter (9) and first (12) and second (13) ducts which supply air to the fan (2) from outside and from inside the passenger compartment respectively, characterised in that the first duct (12) is connected to a chamber (11) which surrounds the side wall of the filter (9) and the second duct (13) is connected to the internal part (10) of the filter (9), and in that adjustment valve means (16) are associated with the first (12) and second (13) ducts and are adapted to assume any configuration between a first operative position in which the first duct (12) is closed and the second duct (13) is open, and a second operative position in which the first duct (12) is open and the second duct (13) is closed.

2. A device according to Claim 1, characterised in that the adjustment valve means comprise a valve (16) with a V-shaped body formed by a pair of blades (17) for closing the first (12) and second (13) ducts, the body (16) being articulated to a wall (14) which separates the first (12) and second (13) ducts and being movable into any position between the first and second operative positions.

3. A device according to Claim 2, characterised in that the closure blades (17) are interconnected by an arcuate portion (19) which cooperates with the separating wall (14).

## Patentansprüche

1. Filtervorrichtung für Kraftfahrzeug -Klimaanlagen, welche ein Gebläse (2), dessen Einlaß (4) mit dem inneren Teil (10) eines rohrförmigen Filters (9) verbunden ist, und erste (12) und zweite (13) Leitungen aufweisen, welche dem Gebläse (2) von außen oder vom Fahrzeuginnenraum her jeweils Luft zuführen, dadurch **gekennzeichnet**, daß die erste Leitung (12) mit einer Kammer (11) verbunden ist, welche die Seitenwand des Filters (9) umgibt, die zweite Leitung (13) mit dem inneren Teil (10) des Filters (9) verbunden ist, und daß Stellventileinrichtungen (16) den ersten (12) und den zweiten (13) Leitungen zugeordnet und derart ausgelegt sind, daß sie eine beliebige Konfiguration zwischen einer ersten Arbeitsstellung, in der die erste Leitung (12) geschlossen ist, und die zweite Leitung (13) offen ist, und einer zweiten Arbeitsstellung einnehmen können, in der die erste Leitung (12) offen und die zweite Leitung (13) geschlossen ist.

2. Vorrichtung nach Anspruch 1, dadurch gekennzeichnet, daß die Stellventileinrichtungen ein Ventil (16) mit einem V-förmigen Körper aufweisen, der von einem Paar von flügelförmigen Klappen (17) zum Schließen der ersten (12) und der zweiten (13) Leitungen gebildet wird, wobei der Körper (16) gelenkig mit einer Wand (14) verbunden ist, welche die erste (12) und die zweite (13) Leitungen trennt und der in eine beliebige Position zwischen den ersten und zweiten Arbeitsstellungen bewegbar ist.

3. Vorrichtung nach Anspruch 2, dadurch gekennzeichnet, daß die flügelförmigen Klappen (17) über einen bogenförmigen Abschnitt (19) untereinander verbunden sind, welcher mit der Trennwand (14) zusammenarbeitet.

## Revendications

1. Dispositif de filtrage pour système de conditionnement d'air de véhicule automobile comprenant un ventilateur (2) dont l'entrée (4) est associée à la partie interne (10) d'un filtre tubulaire (9) et des première (12) et seconde (13) conduites qui fournissent de l'air au ventilateur (2) depuis l'extérieur et depuis l'intérieur du compartiment passagers respectivement, caractérisé en ce que la première conduite (12) est reliée à une chambre (11) qui entoure la paroi latérale du filtre (9) et la seconde conduite (13) est reliée à la partie interne (10) du filtre (9), et en ce que des moyens formant clapet de réglage (16) sont associés aux première (12) et seconde (13) conduites et sont conçus pour prendre une configuration quelconque entre une première position active dans laquelle la première conduite (12) est fermée et la seconde conduite (13) est ouverte et une seconde position active dans laquelle la première conduite (12) est ouverte et la seconde conduite (13) est fermée.

2. Dispositif selon la revendication 1, caractérisé en ce que les moyens formant clapet de réglage comprennent un clapet (16) qui comporte un corps en forme de V constitué par deux volets (17) pour fermer les première (12) et seconde (13) conduites, le corps (16) étant articulé à une paroi (14) qui sépare les première (12) et seconde (13) conduites et étant déplaçable dans une position quelconque entre les première et seconde positions actives.

3. Dispositif selon la revendication 2, caractérisé en ce que les volets de fermeture (17) sont reliés entre eux par une partie arquée (19) qui coopère avec la paroi de séparation (14).